# EUROPEAN PATENT APPLICATION

(11) **EP 3 789 937 A1**
(43) Date of publication of application: **10.03.2021**
(21) Application number: 20184457.8
(22) Date of filing: 07.07.2020
(51) Int. Cl.: G06Q 10/04, G06Q 10/08, G06Q 50/28

(54) **IMAGING DEVICE, METHOD FOR CONTROLLING IMAGE DEVICE, AND SYSTEM INCLUDING IMAGE DEVICE**

(30) Priority: 03.09.2019 JP 2019160539
(71) Applicant: Toshiba TEC Kabushiki Kaisha, Tokyo 141-8562 (JP)
(72) Inventor: Ariga, Norimasa, Tokyo, 141-8562 (JP); Yasunaga, Masaaki, Tokyo, 141-8562 (JP); Yamazaki, Keita, Tokyo, 141-8562 (JP)
(74) Representative: Hoffmann Eitle

(57) **Abstract**

An imaging device includes an imaging unit, a moving mechanism configured to move the imaging device along a floor, and a processor configured to acquire a location of a fixture on the floor and a size of horizontal shelves of the fixture. The processor also acquires an acceptable working range of the imaging unit and determines a traveling route for the imaging device to capture an image of tags attached to the horizontal shelves so that the each tag is in the acceptable working range when imaged.

## Description

### CROSS-REFERENCE TO RELATED APPLICATION

This application is based upon and claims the benefit of priority from Japanese Patent Application No. 2019-160539, filed September 3, 2019, the entire contents of which are incorporated herein by reference.

### FIELD

Embodiments described herein relate generally to an imaging device, a method for controlling the imaging device, and a system including the imaging device.

### BACKGROUND

There is a merchandise shelf imaging device which images an item of merchandise placed on a store fixture such as a store shelf. Such a merchandise shelf imaging device includes an imaging unit and a moving mechanism. The imaging unit includes an optical system and an imaging element which generates an image based on light rays focused by the optical system. The moving mechanism includes, for example, a motor and wheels driven by the motor to move the merchandise shelf imaging device around the store.

The merchandise shelf imaging device moves along the store fixture (e.g., a store shelf) while maintaining a predetermined distance therefrom and images a shelf tag provided on a shelf board of the shelf. That is, the merchandise shelf imaging device images the shelf tag while moving in a direction parallel to the shelf. The shelf tag shows merchandise information, such as a merchandise name, a price, and the like. After acquiring an image of the shelf tag, the merchandise shelf image device performs image analysis on the image, and thereby acquiring the merchandise information about an item of merchandise displayed on the shelf.

There is a store fixture having a plurality of shelf plates each having a different length in a depth direction when viewed from the merchandise shelf imaging device. In such a case, the imaging device may fail to focus on a shelf tag and acquires a blurred image of the shelf tag, which results in failure of the image analysis. Therefore, the merchandise shelf imaging device moves away from the fixture, moves again in the direction parallel to the fixture, and thereby attempts to acquire a clear image of the shelf tag. However, this process may delay the completion of image acquisition and analysis with respect to the shelf tags attached to the fixture.

### SUMMARY OF THE INVENTION

One of the objects of the present invention is to improve prior art techniques and overcome at least some of the prior art problems as for instance above illustrated.

According to a first aspect of the invention, it is provided an imagining device, comprising an imaging unit; a moving mechanism configured to move the imaging device along a floor; and a processor configured to acquire a location of a fixture on the floor and a size of each of a plurality of horizontal shelves of the fixture, acquire an acceptable working range of the imaging unit, and calculate a traveling route for the imaging device past the fixture for capturing an image of tags attached to each of the horizontal shelves of the fixture such that each tag is in the acceptable working range.

Optionally, in the imaging device according to the first aspect of the invention, the processor is further configured to group the horizontal shelves into groups and determine a traveling route for each group.

Optionally, in the imaging device according to the first aspect of the invention, the processor determines the traveling route for each of the groups so that a distance between the imaging device and the fixture in a first direction is less than a sum of a smallest length of the horizontal surfaces of each group in the first direction and an acceptable upper limit working distance and greater than a sum of a greatest length of the horizontal shelves of each group in the first direction and an acceptable lower limit working distance.

Optionally, in the imaging device according to the first aspect of the invention, the processor is further configured to control the imaging device to capture an image of the tag when the imaging device is moving along the traveling route, and perform image recognition on the captured image and acquire information from the tag.

Optionally, in the imaging device according to the first aspect of the invention, the processor is further configured to control the moving mechanism to move the imaging device in a direction approaching the fixture, control the imaging device to capture a plurality of images of a tag attached to one of the horizontal shelves when the imaging device is moving towards the fixture, perform image recognition on the captured images, and determine the acceptable working range based on a result of the image recognition.

Optionally, in the imaging device according to the first aspect of the invention, the moving mechanism comprises a trolley with wheels and a motor.

Optionally, the imaging device according to the first aspect of the invention further comprises a memory that stores the location of the fixture, the size of each of the horizontal shelves, and the acceptable working range.

Optionally, in the imaging device according to the first aspect of the invention, the fixture is a merchandise display shelf for a retail location.

Optionally, in the imaging device according to the first aspect of the invention, the floor is a store floor or a warehouse floor.

Optionally, in the imaging device according to the first aspect of the invention, the tag is attached to an end face of the horizontal shelves.

According to a second aspect of the invention, it is provided a method for controlling an imaging device, the method comprising acquiring a location of a fixture on a floor and a size of each of a plurality of horizontal shelves of the fixture; acquiring an acceptable working range of an imaging unit on the imaging device; and determining a traveling route for the imaging device past the fixture for capturing an image of tags attached to each of the horizontal shelves such that each tag is in the acceptable working range.

Optionally, the method according to the second aspect of the invention further comprises grouping the horizontal shelves into groups and determining a traveling route for each group.

Optionally, in the method according to the second aspect of the invention, the traveling route is determined for each of the groups so that a distance between a lens front edge of the imaging device and a backboard of the fixture in a first direction is less than a sum of a smallest length of the horizontal shelves of each group in the first direction and an acceptable upper limit working distance and greater than a sum of a greatest length of the horizontal shelves of each group in the first direction and an acceptable lower limit working distance.

Optionally, the method according to the second aspect of the invention further comprises capturing an image of the tag when the imaging device is moving along the traveling route; and performing image recognition on the captured image and acquiring information from the tag.

Optionally, the method according to the second aspect of the invention further comprises moving the imaging device in a direction approaching the fixture; capturing a plurality of images of a tag attached to one of the horizontal shelves when the imaging device is moving towards the fixture; performing image recognition on the captured images; and determining the acceptable working range based on a result of the image recognition.

Optionally, in the method according to the second aspect of the invention, the imaging device comprises a trolley with wheels and a motor.

Optionally, in the method according to the second aspect of the invention, the location of the fixture, the size of each of the horizontal shelves, and the acceptable working range are stored in a memory of the imaging device.

Optionally, in the method according to the second aspect of the invention, the fixture is a merchandise display shelf at a retail location.

Optionally, in the method according to the second aspect of the invention, the floor is a store floor or a warehouse floor.

According to a third aspect of the invention, it is provided a system, comprising an imaging device configured to move along a traveling route and capture an image while the imaging device is moving along the traveling route; and an information processing device configured to acquire a location of a fixture on a floor and a size of each of a plurality horizontal shelves of the fixture, acquire an acceptable working range of an imaging unit of the imaging device, generating the traveling route for the imaging device for capturing an image of tags attached to each of the horizontal shelves of the fixture such each tag is in the acceptable working range, and transmit the generated traveling route to the imaging device.

### DESCRIPTION OF THE DRAWINGS

FIG. 1 illustrates a schematic configuration of a merchandise shelf imaging device according to a first embodiment.
FIG. 2 illustrates a block diagram of the merchandise shelf imaging device.
FIG. 3 illustrates a flowchart of determining a traveling route by the merchandise shelf imaging device.
FIGs. 4 and 5 illustrate the traveling route determined by the merchandise shelf imaging device according to the first embodiment.
FIG. 6 illustrates a block diagram of a merchandise shelf imaging device according to a second embodiment.

### DETAILED DESCRIPTION

One or more embodiments provide a shelf imaging device and an information processing device which can efficiently acquire a shelf tag image.

In general, according to one embodiment, an imaging device includes an imaging unit, a moving mechanism configured to move the imaging device along a floor, and a processor. The processor is configured to acquire a location of a fixture on the floor and a size of each horizontal shelf of the fixture. The processor also is configured to acquire an acceptable working range for the imaging unit. In this context, the acceptable working range corresponds to the distances at which the imaging unit can acquire an image of a tag to be displayed by or attached to the shelves of the fixture. The processor calculates a traveling route for the imaging device past the fixture for capturing an image of tags attached to each of the horizontal shelves of the fixture such that each tag is in the acceptable working range.

Hereinafter, embodiments will be described with reference to the drawings.

### First Embodiment

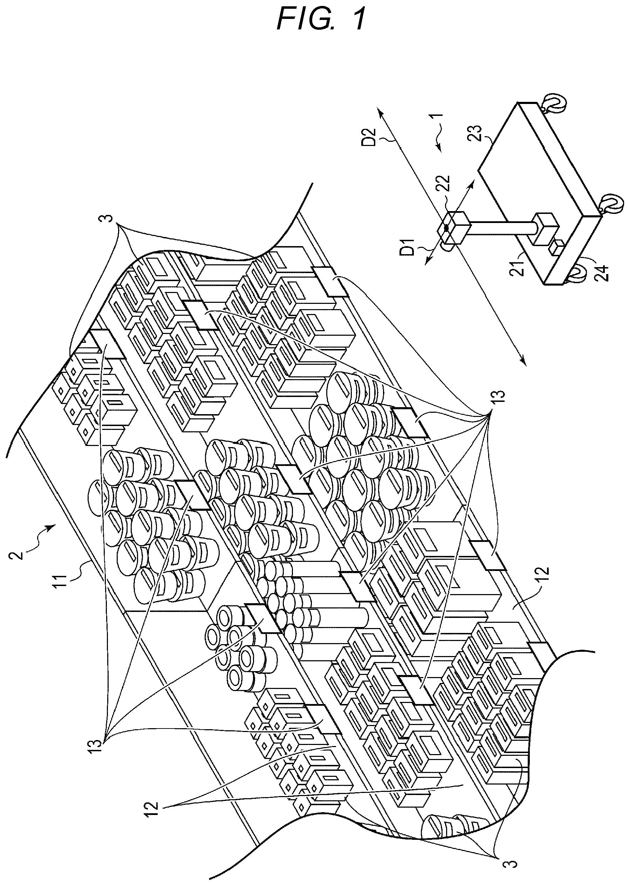

FIG. 1 illustrates a schematic configuration of a merchandise shelf imaging device 1 according to a first embodiment.

The merchandise shelf imaging device 1 images a store fixture 2 on which a merchandise (or an article) 3 is placed. The store fixture 2 is located in a predetermined place, such as a store or a warehouse.

The fixture 2 includes a backboard 11 and shelves 12 protruding from the backboard 11.

The backboard 11 is a part of the fixture 2. The backboard 11 is, for example, formed in a plate shape standing in a vertical direction.

The shelf 12 is a shelf plate on which the merchandise 3 is placed. The shelf 12 protrudes horizontally from the backboard 11, for example. The shelf 12 has a shelf tag 13 on which, for example, a merchandise name, a price, or other various merchandise information is provided. The shelf tag 13 is attached at an end of the shelf 12 opposite to the backboard 11.

For example, a plurality of fixtures 2 are arranged at a predetermined space to form a passage or aisle. The shelf 12 protrudes from the backboard 11 toward the passage side. That is, the shelf tag 13 faces toward the passage. The merchandise 3 arranged on the shelf 12 is displayed such that the front surface of the merchandise 3 (i.e., the face of the merchandise 3) faces the passage.

The merchandise shelf imaging device 1 moves past the shelf tags 13 (e.g., in the direction D2 in FIG. 1) while maintaining a predetermined distance with respect to the front end of the shelf 12 of the fixture 2 in the first direction D1, the merchandise shelf imaging device 1 acquires images of the shelf tags 13 while moving in the second direction D2 parallel to the backboard 11. As a result, the merchandise shelf imaging device 1 acquires images of the shelf tags 13 and the merchandise 3 arranged on the shelves 12. Hereinafter, an image of a shelf tag 13 is referred to as a shelf tag image.

The merchandise shelf imaging device 1 includes a control device 21, a camera 22, a moving mechanism 23, and an object detection sensor 24.

The control device 21 controls the operation of the camera 22 and the moving mechanism 23, and makes determinations based on the detection results from the object detection sensor 24. Further, the control device 21 performs processing such as image analysis of a shelf tag image acquired by the camera 22 and generation of a traveling route for the merchandise shelf imaging device 1.

The camera 22 is an imaging device including an optical system and an imaging element which generates an image based on light rays focused by the optical system under the control of the control device 21.

The optical system is, for example, a central-projection-type imaging lens. The optical system focuses light rays from a subject on an imaging surface of the imaging element. In addition, the optical system includes, for example, a plurality of lenses and a diaphragm which adjusts an amount of a light beam incident on the imaging element via the lenses. One or more of the plurality of lenses may be a focusing lens which adjusts a working distance from a lens front edge to an object surface.

The imaging element includes an imaging surface on which a plurality of pixel elements are arranged for performing photoelectric conversion and storing electric charges. The imaging element is, for example, a Charge Coupled Devices (CCD) image sensor, a Complementary Metal Oxide Semiconductor (CMOS) image sensor, or another imaging element. The imaging element converts a subject image formed on the imaging surface by the optical system into an electric image signal. The imaging element converts the image signal, which is an analog electric signal, into image data, which is a digital signal, and outputs the image data.

The camera 22 may include a lighting unit for emitting light rays at the angle of view of the optical system (hereinafter called a field of view). The lighting unit may be installed on any device of the merchandise shelf imaging device 1 instead of the camera 22.

The moving mechanism 23 is a device which moves the merchandise shelf imaging device 1 under the control of the control device 21. The moving mechanism 23 includes, for example, a trolley or base portion to which the camera 22 is fixed and a motor which drives the wheels of the trolley. For example, the camera 22 is fixed to the trolley so that the optical axis of the optical system is horizontal to the floor. The moving mechanism 23 moves the merchandise shelf imaging device 1 (the camera 22 fixed to the trolley) by driving the wheels with the motor. The moving mechanism 23 may be any device that can move the merchandise shelf imaging device 1, such as a movable leg using a crank or a propeller.

The object detection sensor 24 is a sensor which detects the presence of an object. The object detection sensor is under the control of the control device 21. The object detection sensor 24 is fixed to, for example, a trolley of the moving mechanism 23. The object detection sensor 24 is, for example, a laser range finder. The object detection sensor 24 irradiates a measurement target with a laser beam and measures the distance to the measurement target based on the time until a reflected light ray is detected. In such a case, the object detection sensor 24 measures the distance between the sensor and a point where the laser beam is reflected. Based on the detection result of the object detection sensor 24, the distance to the fixture 2 around the merchandise shelf imaging device 1 can be recognized. The object detection sensor 24 is disposed, for example, at a position where the object detection sensor 24 can detect the front of the moving mechanism 23 in a traveling direction. Further, a plurality of the object detection sensors 24 may be provided on the trolley of the moving mechanism 23.

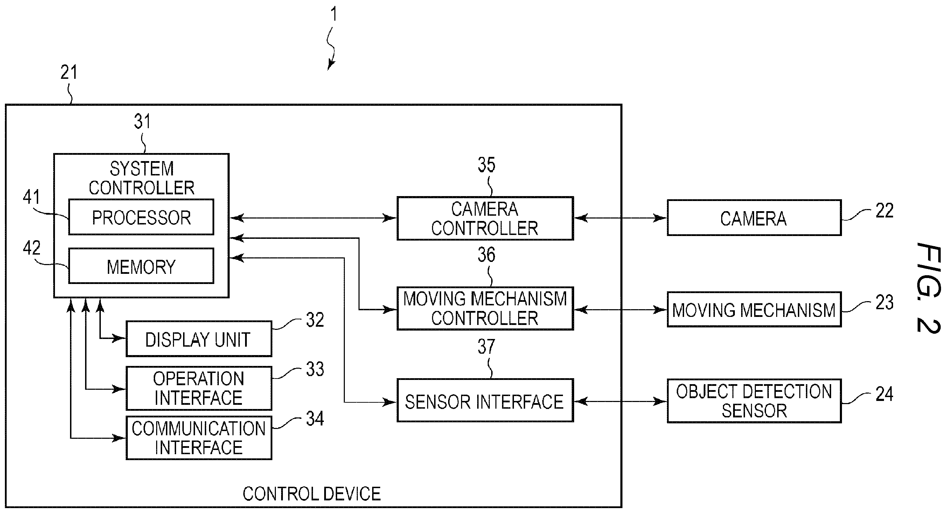

FIG. 2 is a diagram illustrating a configuration example of the control device 21. The control device 21 includes a system controller 31, a display unit 32, an operation interface 33, a communication interface 34, a camera controller 35, a moving mechanism controller 36, and a sensor interface 37.

The system controller 31 controls the merchandise shelf imaging device 1. The system controller 31 includes, for example, a processor 41 and a memory 42.

The processor 41 is an arithmetic element which performs arithmetic processing. The processor 41 is, for example, a CPU (central processing unit). The processor 41 performs various processes based on data such as programs stored in the memory 42. The processor 41 executes various operations by executing a program stored in the memory 42.

The memory 42 stores a program, data used in the program, and the like. The memory 42 also functions as a working memory. That is, the memory 42 temporarily stores data being processed by the processor 41, a program executed by the processor 41, and the like.

The display unit 32 includes a display which displays a screen according to a video signal output from the system controller 31 or a graphic controller (not illustrated) . For example, on the display of the display unit 32, a screen for various settings of the merchandise shelf imaging device 1 is displayed.

The operation interface 33 is connected to an operation device (not illustrated) . The operation interface 33 supplies an operation signal corresponding to the operation of the operation device to the system controller 31. The operation device is an input device, such as a touch sensor, a numeric keypad, a power key, a paper feed key, various function keys, a keyboard, or the like. The touch sensor acquires information indicating a specified position in a certain area. The touch sensor may be integrated into the display unit 32 to operate as a touch-enabled display and outputs a signal indicating a touched position on the screen displayed on the display unit 32 to the system controller 31.

The communication interface 34 is an interface for communicating with other devices. The communication interface 34 is used, for example, for communication with a higher-level device or an external device. The communication interface 34 performs wireless communication with another device according to a standard such as Bluetooth® or Wi-Fi®. Further, for example, the communication interface 34 may be a NIC (network interface card) connectable to a LAN (local area network) or the like.

The camera controller 35 controls the camera 22. The camera controller 35 causes the camera 22 to execute imaging process under the control of the system controller 31. Further, the camera controller 35 controls or transmits the imaging parameters of the camera 22 to the camera 22.

The imaging parameters include, for example, a focal length, an aperture value, an exposure time, sensitivity or ISO, and a working distance, i.e., a distance from a lens front edge to an object surface. The camera controller 35 may acquire optical characteristic information on the optical system of the camera 22 by communicating with the camera 22. For example, the camera controller 35 may be configured to acquire information such as the focal length of the optical system, the aperture value, and the working distance from the camera 22. That is, the camera controller 35 can acquire the imaging parameters currently used in the camera 22. The camera controller 35 also supplies the imaging parameters to the system controller 31.

The moving mechanism controller 36 controls the moving mechanism 23. The moving mechanism controller 36 causes the moving mechanism 23 to move the merchandise shelf imaging device 1 under the control of the system controller 31.

The sensor interface 37 relays communication between the object detection sensor 24 and the system controller 31. When the moving mechanism controller 36 controls the moving mechanism 23 based on the detection result of the object detection sensor 24, the sensor interface 37 also supplies the detection result from the object detection sensor 24 to the moving mechanism controller 36.

Next, determination about a traveling route by the merchandise shelf imaging device 1 in the control device 21 will be described.

The system controller 31 of the control device 21 determines a traveling route based on the fixture information and an acceptable working range.

First, the acceptable working range and fixture information will be described.

The memory 42 of the system controller 31 of the control device 21 stores the acceptable working range in advance. The acceptable working range indicates a range at which the camera 22 can acquire a shelf tag image having a quality sufficient for performing image analysis. The acceptable working range is between an acceptable lower limit working distance and an acceptable upper limit working distance. For example, the acceptable lower limit working distance is the minimum distance from the lens front edge to an object surface of a target object (e.g., a shelf tag) to be imaged, and the acceptable upper limit working distance is the maximum distance from the lens front edge to the object surface. Specifically, the acceptable working range is determined by acquiring shelf tag images with the camera 22 while changing the working distance from the object surface and determining a range over which the merchandise information can be correctly read by image analysis . The acceptable lower and upper limit working distances may the minimum and maximum distances from a predetermined position of the housing of the merchandise shelf imaging device 1 to the surface of the object to be imaged, respectively.

Further, the acceptable working range may be calculated based on the optical characteristic information of the camera 22. For example, based on the permissible circle of confusion determined based on the resolution required for image analysis, the focal length, the aperture value, and the working distance that is the distance from the lens front edge to the object surface, the front depth of field and the rear depth of field can generally be calculated. The acceptable working range may be set by setting the calculated front depth of field as an acceptable lower limit working distance and setting the calculated rear depth of field as an acceptable upper limit working distance.

The memory 42 of the system controller 31 of the control device 21 stores fixture information in advance. The fixture information is information relating to the fixture (s) 2 arranged in a predetermined area. The fixture information is information including a fixture position and a protrusion amount list for each fixture 2, as stated below.

The fixture position is information indicating a position where a fixture 2 is installed. The traveling route area is an area on a map typically set in advance. The fixture position is indicated by, for example, coordinates of the positions of the four corners of the fixture 2 in a two-dimensional space corresponding to travel route area. The fixture position is determined in advance by, for example, detecting each fixture 2 in a predetermined area by a device such as a laser range finder. Furthermore, the fixture position may be determined in advance based on the detection result of the object detection sensor 24 of the merchandise shelf imaging device 1.

The protrusion amount list indicates the protrusion amount of each shelf 12 of the fixture 2. For example, the protrusion amount list associates identification information of each shelf 12 (for example, a shelf number) with the protrusion amount thereof. The protrusion amount indicates, for example, the protruding length of the shelf 12 from the backboard 11. Specifically, the protrusion amount is a distance between the backboard 11 and the position of the shelf 12 where the shelf tag 13 is provided in the first direction D1 shown in FIG. 1. That is, the protrusion amount list may be any information as long as the position of the shelf tag 13 can be specified based on the fixture position described above. In other words, the fixture information is information indicating the position of the shelf tag 13 in the traveling route generation area for each fixture 2.

Next, an example of determination process of a traveling route based on the fixture information and the acceptable working range will be described.

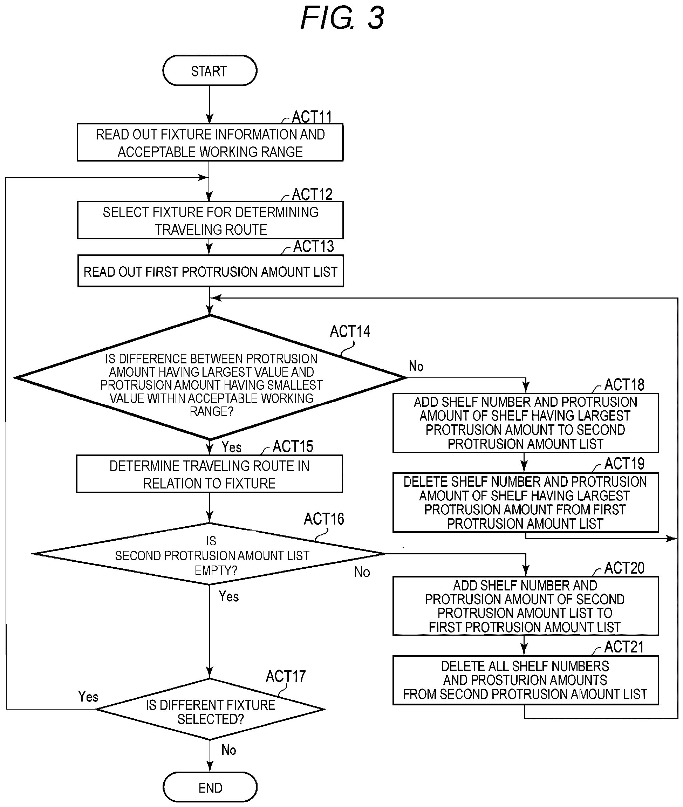

FIG. 3 is a diagram for illustrating the determination process. In the following example, the relative distance of the merchandise shelf imaging device 1 to the fixture 2 indicates the distance in the first direction D1 from the reference point on the merchandise shelf imaging device 1 to the backboard 11 of the fixture 2. In this example, the relative distance of the merchandise shelf imaging device 1 to the fixture 2 is a distance from the lens front edge of the camera 22 to the backboard 11 of the fixture 2. In other examples, the relative distance of the merchandise shelf imaging device 1 to the fixture 2 may be a distance from a predetermined position of the housing of the merchandise shelf imaging device 1 to the backboard 11 of the fixture 2.

First, the processor 41 of the system controller 31 reads out the fixture information and the acceptable working range from the memory 42 (ACT 11). The processor 41 selects a fixture 2 for determining a traveling route (ACT 12). For example, the processor 41 causes the display unit 32 to display a screen for selecting the fixture 2 and selects the fixture 2 based on the operation of the operation interface 33. Further, the processor 41 may be configured to select all the fixtures 2 in the fixture information one by one.

The processor 41 reads out the protrusion amount list associated with the selected fixture 2 from the memory 42 (ACT 13). Thereby, the processor 41 acquires the fixture position of the selected fixture 2 and the protrusion amount of each of the plurality of shelves 12 included in the fixture 2. The protrusion amount list read from the memory 42 is referred to in this context as a first protrusion amount list. Further, the processor 41 secures a storage area on the memory 42 for storing a second protrusion amount list different from the first protrusion amount list. At this point, the second protrusion amount list is empty.

The processor 41 determines whether the difference between the protrusion amount having the largest value and the protrusion amount having the smallest value in the acquired protrusion amount list is within the acceptable working range (ACT 14).

When the processor 41 determines that the difference between the protrusion amount having the largest value and the protrusion amount having the smallest value is within the acceptable working range (ACT 14, YES), the processor 41 determines a traveling route (ACT 15) according to the following procedure.

The processor 41 determines a traveling route such that the end of the shelf 12 which protrudes most from the backboard 11 of the fixture 2 and the end of the least protruding shelf 12 are within the acceptable working range. Specifically, the processor 41 determines the position of the merchandise shelf imaging device 1 in the first direction D1 such that the distance between the backboard 11 of the fixture 2 and the reference point of the merchandise shelf imaging device 1 is shorter than the "protrusion amount of the least protruding shelf 12 + acceptable upper limit working distance" and longer than the "protrusion amount of the shelf 12 that protrudes most + acceptable lower limit working distance".

Further, the processor 41 determines a traveling route such that the camera 22 performs imaging while the merchandise shelf imaging device 1 moves in the second direction D2 at the appropriately determined position for the merchandise shelf imaging device 1. Thereby, it is possible to determine a traveling route for causing the merchandise shelf imaging device 1 to image the plurality of shelf tags 13 arranged along the second direction D2. After determining a traveling route, the processor 41 deletes from the first protrusion amount list the shelf number(s) used for the route determination.

Next, the processor 41 determines whether there is any remaining entry in the second protrusion amount list (ACT 16) . That is, the processor 41 determines whether the second protrusion amount list is empty. When the processor 41 determines that the second protrusion amount list is empty (ACT 16, YES), the processor 41 determines whether a different fixture 2 has been selected (ACT 17). When the processor 41 determines that a different fixture 2 is selected (ACT 17, YES), the processor 41 proceeds to the processing of ACT 12. If the processor 41 determines that a different fixture 2 has not been selected (ACT 17, NO), the processor 41 ends the processing of FIG. 3.

In addition, if the processor 41 determines in ACT 14 that the difference between the protrusion amount having the largest value and the protrusion amount having the smallest value is not within the acceptable working range (ACT 14, NO), the shelf number of the shelf 12 having the largest protrusion amount and the protrusion amount thereof are added to the second protrusion amount list (ACT 18).

The processor 41 deletes the shelf number of the shelf 12 having the largest protrusion amount and the protrusion amount thereof from the first protrusion amount list (ACT 19), and returns to the processing of ACT 14. That is, the processor 41 moves information from the first protrusion amount list to the second protrusion amount list until all the shelves 12 in the first protrusion amount list fall within the acceptable working range.

When the processor 41 determines in ACT 16 that the second protrusion amount list is not empty (ACT 16, NO), the processor 41 adds the shelf number and the protrusion amount from the second protrusion amount list to the first protrusion amount list (ACT 20).

The processor 41 then deletes all shelf numbers and protrusion amounts from the second protrusion amount list (ACT 21), and returns to processing of ACT 14. That is, the processor 41 moves all the shelf numbers and the protrusion amounts from the second protrusion amount list to the first protrusion amount list.

As a result, the processor 41 generates a traveling route at a stage where imaging is possible within the acceptable working range. That is, the processor 41 divides the shelves 12 into groups for which imaging within the acceptable working range can be performed and generates a traveling route for each group. The processor 41 stores the generated traveling route in the memory 42. Further, the processor 41 may be configured to send the traveling route to an external device via the communication interface 34.

The merchandise shelf imaging device 1 images the shelf tags 13 using the camera 22 while being moved along the generated traveling route by the moving mechanism 23 in a direction parallel to the direction along which the shelf tags 13 are arranged. When there is a shelf 12 which does not fall within the acceptable working range, the merchandise shelf imaging device 1 can move closer to or further from the shelf tag(s) 13 in the direction orthogonal to the backboard 11 of the relevant fixture 2. As a result, the merchandise shelf imaging device 1 acquires a shelf tag image. As a result, it becomes possible to acquire the shelf tag images more efficiently. Further, the merchandise shelf imaging device 1 can perform image analysis on the shelf tag images and acquire merchandise information.

The generation of the traveling route will be described with a specific example.

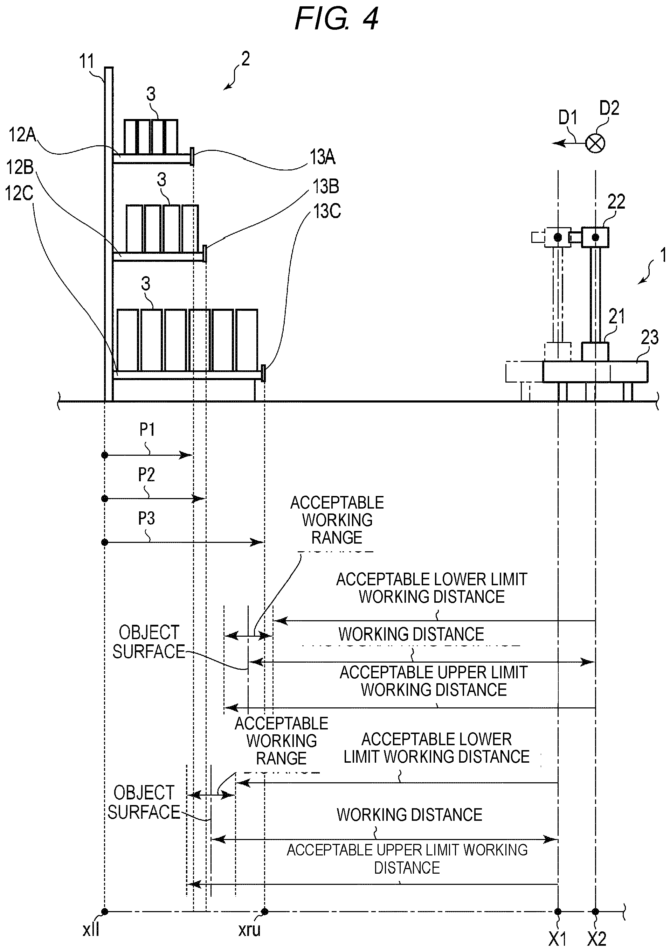

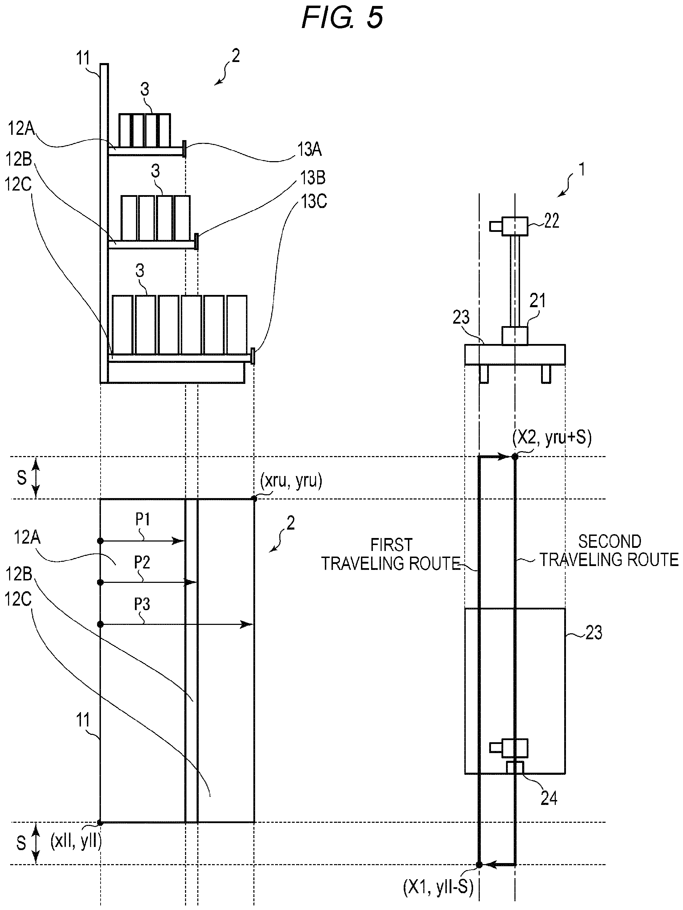

FIGS. 4 and 5 are diagrams illustrating a traveling route determined by the merchandise shelf imaging device 1. FIG. 4 is a diagram of a fixture 2 and the merchandise shelf imaging device 1 as viewed from the second direction D2. FIG. 5 is a diagram of the fixture 2 and the merchandise shelf imaging device 1 as viewed from above.

In the examples of FIGS. 4 and 5, the fixture positions are indicated by the coordinates, (xru, yru), (xII, yru), (xII, yII), (xru, yII), and the fixture 2 includes a first shelf 12A having a first protrusion amount P1, a second shelf 12B having a second protrusion amount P2, and a third shelf 12C having a third protrusion amount P3. Here, the difference between the first protrusion amount P1 and the third protrusion amount P3 does not fall within the acceptable working range, and the difference between the first protrusion amount P1 and the second protrusion amount P2 falls within the acceptable working range. In this example, as shown in FIG. 5, a traveling margin S is set in the second direction D2 in consideration of the direction of the camera 22 and the angle of view thereof.

In this case, the first protrusion amount list includes information of "first shelf 12A: first protrusion amount P1", "second shelf 12B: second protrusion amount P2", and "third shelf 12C: third protrusion amount P3".

Since the difference between the first protrusion amount P1 and the third protrusion amount P3 does not fall within the acceptable working range, the processor 41 moves the entry, "third shelf 12C : the third protrusion amount P3" having the largest protrusion amount, from the first protrusion amount list to the second protrusion amount list.

Since the difference between the first protrusion amount P1 and the second protrusion amount P2 falls within the acceptable working range, the processor 41 generates a first traveling route at a position X1 in the first direction D1 so that the shelf tag 13A at the end of the first shelf 12A and the shelf tag 13B at the end of the second shelf 12B are included in the acceptable working range. With respect to the coordinate, "XII", which is the x coordinate of the backboard 11 of the fixture 2 in the first direction D1, "X1" is determined so as to be shorter than "first protrusion amount P1 + acceptable upper limit working distance" and longer than "second protrusion amount P2 + acceptable lower limit working distance".

Also, with respect to the remaining third protrusion amount P3, a second traveling route is determined at the position X2 in the first direction D1 such that the shelf tag 13C at the end of the third shelf 12C is included in the acceptable working range. With respect to the coordinate, "XII", which is the x coordinates of the backboard 11 of the fixture 2 in the first direction D1, "X2" is determined so as to be shorter than "third protrusion amount P3 + acceptable upper limit working distance" and longer than "third protrusion amount P3 + acceptable lower limit working distance".

According to the above method, as illustrated in FIG. 5, the processor 41 determines a first traveling route from (X1, yII - S) to (X1, yru + S) to perform imaging. In the first traveling route, the merchandise shelf imaging device 1 can acquire the shelf tag images of the shelf tag 13A and the shelf tag 13B of the first shelf 12A and the second shelf 12B.

Also, as illustrated in FIG. 5, the processor 41 determines a second traveling route from (X2, yru + S) to (X2, yII - S) to perform imaging. In the second traveling route, the merchandise shelf imaging device 1 can acquire the shelf tag image of the shelf tag 13C of the third shelf 12C.

### Second Embodiment

In the first embodiment, the merchandise shelf imaging device 1 is configured to determine a traveling route. However, the present disclosure is not limited to that configuration. An information processing device communicating with the merchandise shelf imaging device 1 may supply a traveling route for the merchandise shelf imaging device 1, and the merchandise shelf imaging device 1 may acquire a shelf tag image based on the traveling route thus supplied. In such a case, the information processing device generates a traveling route for the merchandise shelf imaging device 1.

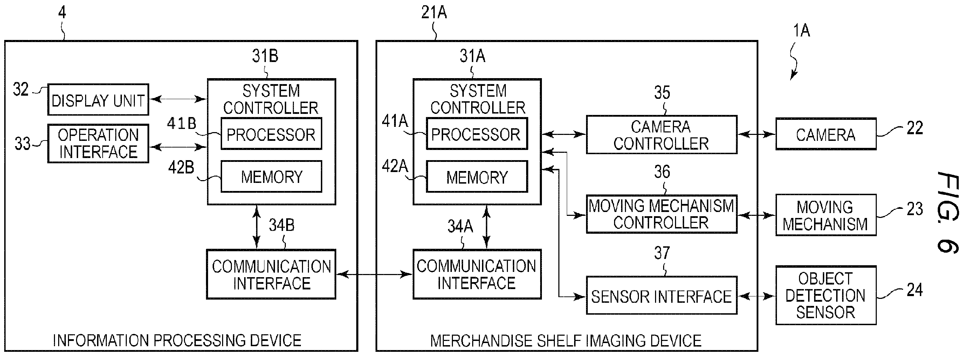

FIG. 6 is a diagram illustrating a configuration of a merchandise shelf imaging device 1A and an information processing device 4 according to a second embodiment. In the second embodiment, the information processing device 4 which communicates with the merchandise shelf imaging device 1A generates a traveling route and supplies the traveling route to the merchandise shelf imaging device 1A. The same components as those in the first embodiment are denoted by the same reference symbols and detailed description of such repeated aspects will be omitted.

The merchandise shelf imaging device 1A includes a control device 21A, a camera 22, a moving mechanism 23, and an object detection sensor 24.

The control device 21A includes a system controller 31A, a communication interface 34A, a camera controller 35, a moving mechanism controller 36, and a sensor interface 37.

The system controller 31A is different from the system controller 31 in that the system controller 31A does not generate a traveling route.

The communication interface 34A communicates with an external device by wireless communication similarly to the communication interface 34. The communication interface 34A communicates with the information processing device 4. For example, the traveling route determined by the information processing device 4 can be received by the system controller 31A via the communication interface 34A. The optical characteristic information of the camera 22 may be transmitted to the information processing device 4 via the communication interface 34A. A shelf tag image acquired by the camera 22 may also be transmitted to the information processing device 4 via the communication interface 34A.

The information processing device 4 includes a system controller 31B, a display unit 32, an operation interface 33, and a communication interface 34B.

The system controller 31B determines a traveling route. The system controller 31B includes, for example, a processor 41B and a memory 42B.

The processor 41B is an arithmetic element which executes arithmetic processing. The processor 41B is, for example, a CPU. The processor 41B performs various processes based on data such as a program stored in the memory 42B. The processor 41B can execute various operations by executing a program stored in the memory 42B.

The memory 42B stores a program and data used in the program. The memory 42B also functions as a working memory. That is, the memory 42B temporarily stores data being processed by the processor 41, a program being executed by the processor 41, and the like.

The memory 42B stores the fixture information and an acceptable working range for each merchandise shelf imaging device 1A or each type of the merchandise shelf imaging device 1A.

The processor 41B of the system controller 31B determines a traveling route as illustrated in FIG. 3. That is, the processor 41B reads out the fixture information and the acceptable working range from the memory 42B. The processor 41B selects a fixture 2 for generating a traveling route. The processor 41B reads out a protrusion amount list associated with the selected fixture 2 from the memory 42B. Thereby, the processor 41B acquires the fixture position of the selected fixture 2 and the protrusion amount of each of the plurality of shelves 12 included in the fixture 2. The protrusion amount list read from the memory 42B is referred to in this context as a first protrusion amount list. The processor 41B creates a storage area in the memory 42B for storing a second protrusion amount list that is different from the first protrusion amount list. At this point, the second protrusion amount list is empty.

The processor 41B generates a traveling route such that imaging will be possible within the acceptable working range. In other words, the processor 41B divides the shelves 12 into groups for which imaging within the acceptable working range can be performed and generates a traveling route for each group. The processor 41B supplies the generated traveling route to the merchandise shelf imaging device 1A.

Thus, the information processing device 4 can efficiently acquire the shelf tag images with the merchandise shelf imaging device 1A. The information processing device 4 may be configured to receive the shelf tag image from the merchandise shelf imaging device 1A, perform image analysis on the shelf tag image, and acquire merchandise information.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. An imaging device, comprising:
an imaging unit;
a moving mechanism configured to move the imaging device along a floor; and
a processor configured to:
acquire a location of a fixture on the floor and a size of each of a plurality of horizontal shelves of the fixture,
acquire an acceptable working range of the imaging unit, and
calculate a traveling route for the imaging device past the fixture for capturing an image of tags attached to each of the horizontal shelves of the fixture such that each tag is in the acceptable working range.

2. The imaging device according to claim 1, wherein the processor is further configured to group the horizontal shelves into groups and determine a traveling route for each group.

3. The imaging device according to claim 2, wherein the processor determines the traveling route for each of the groups so that a distance between the imaging device and the fixture in a first direction is less than a sum of a smallest length of the horizontal surfaces of each group in the first direction and an acceptable upper limit working distance and greater than a sum of a greatest length of the horizontal shelves of each group in the first direction and an acceptable lower limit working distance.

4. The imaging device according to any of claims 1 to 3, wherein the processor is further configured to:
control the imaging device to capture an image of the tag when the imaging device is moving along the traveling route, and
perform image recognition on the captured image and acquire information from the tag.

5. The imaging device according to any of claims 1 to 4, wherein the processor is further configured to:
control the moving mechanism to move the imaging device in a direction approaching the fixture,
control the imaging device to capture a plurality of images of a tag attached to one of the horizontal shelves when the imaging device is moving towards the fixture,
perform image recognition on the captured images, and
determine the acceptable working range based on a result of the image recognition.

6. The imaging device according to any of claims 1 to 5, wherein the moving mechanism comprises a trolley with wheels and a motor.

7. The imaging device according to any of claims 1 to 6, further comprising:
a memory that stores the location of the fixture, the size of each of the horizontal shelves, and the acceptable working range.

8. The imaging device according to any of claims 1 to 7, wherein the fixture is a merchandise display shelf for a retail location.

9. The imaging device according to any of claims 1 to 8, wherein the floor is a store floor or a warehouse floor.

10. The imaging device according to any of claims 1 to 9, wherein the tag is attached to an end face of the horizontal shelves.

11. A method for controlling an imaging device, the method comprising:
acquiring a location of a fixture on a floor and a size of each of a plurality of horizontal shelves of the fixture;
acquiring an acceptable working range of an imaging unit on the imaging device; and
determining a traveling route for the imaging device past the fixture for capturing an image of tags attached to each of the horizontal shelves such that each tag is in the acceptable working range.

12. The method according to claim 11, further comprising:
grouping the horizontal shelves into groups and determining a traveling route for each group.

13. The method according to claim 12, wherein the traveling route is determined for each of the groups so that a distance between a lens front edge of the imaging device and a backboard of the fixture in a first direction is less than a sum of a smallest length of the horizontal shelves of each group in the first direction and an acceptable upper limit working distance and greater than a sum of a greatest length of the horizontal shelves of each group in the first direction and an acceptable lower limit working distance.

14. The method according to any of claims 11 to 13, further comprising:
capturing an image of the tag when the imaging device is moving along the traveling route; and
performing image recognition on the captured image and acquiring information from the tag.

15. A system, comprising:
an imaging device configured to move along a traveling route and capture an image while the imaging device is moving along the traveling route; and
an information processing device configured to:
acquire a location of a fixture on a floor and a size of each of a plurality horizontal shelves of the fixture,
acquire an acceptable working range of an imaging unit of the imaging device,
generating the traveling route for the imaging device for capturing an image of tags attached to each of the horizontal shelves of the fixture such each tag is in the acceptable working range, and
transmit the generated traveling route to the imaging device.
